**Europäisches Patentamt**

(19) **European Patent Office**

**Office européen des brevets**

(11) Publication number : **0 383 497 B1**

(12) # EUROPEAN PATENT SPECIFICATION

(45) Date of publication of patent specification :
30.03.94 Bulletin 94/13

(51) Int. Cl.[5] : **C09J 133/08,** C08L 33/08,
// C09J7/02, C09J157/02

(21) Application number : **90301404.1**

(22) Date of filing : **09.02.90**

(54) **Pressure sensitive adhesive.**

(30) Priority : **13.02.89 GB 8903212**

(43) Date of publication of application :
**22.08.90 Bulletin 90/34**

(45) Publication of the grant of the patent :
**30.03.94 Bulletin 94/13**

(84) Designated Contracting States :
**AT BE CH DE DK ES FR GB GR IT LI LU NL SE**

(56) References cited :
**EP-A- 0 085 471
DERWENT ACCESSION NO. 85-041 673, Questel Telesystems (WPIL) DERWENT PUBL.
LTD., London & JP-A-60 001 277 (MITSUBISHI GAS CHEM.)
DERWENT ACCESSION NO. 84-137 545, Questel Telesystems (WPIL) DERWENT PUBL.
LTD., London & JP-A-59 071 479 (TOHO BESLON)**

(73) Proprietor : **EXXON CHEMICAL PATENTS INC.
200 Park Avenue
Florham Park New Jersey 07932 (US)**

(72) Inventor : **Yeadon, Graham
Strada Negri 22
I-10090 Castegneto PO (TO) (IT)**
Inventor : **Wouters, Guy Joseph
Avenue van Becelaere 28A
B-1170 Brussels (BE)**

(74) Representative : **Veldhuizen, Albert Dirk
Willem et al
Exxon Chemical Limited Exxon Chemical
Technology Centre PO Box 1
Abingdon Oxfordshire OX13 6BB (GB)**

EP 0 383 497 B1

## Description

The present invention pertains to resins suitable as tackifiers for butyl acrylate based polymers particularly those used in pressure sensitive adhesives. The invention also relates to achesive formulations which are blends of the tackifier resin and the butyl acrylate based polymer and resin emulsions useful when the adhesive formulations are water based.

Pressure sensitive adhesives are, among other applications, used in the tape and label field. A pressure sensitive adhesive may be used in a number of applications such as masking tape, electrical tape and medicinal tapes for holding dressings and the like in place. The term label covers a broad range of products and includes items such as price tags in the supermarket and labels on glass or plastic containers. In the case of "labels" two types of bonding are required, namely, permanent and removable. Permanent bonding is required for items such as labels on glass or plastic containers when the life of the label will be relatively long and for security. Removable bonding is desirable for items such as price tags and peelable tape.

Pressure sensitive adhesives should have a high initial tack so that the adhesive surface merely needs to be contacted and pressed to a substrate to achieve bonding. There should be little or no requirement to hold the adhesive and substrate in position for any significant time while a bond develops. Depending upon the strength of adhesion required the bonding force of the adhesive may increase with time to provide a relatively permanent bond.

It is known to prepare at least three different types of adhesives using natural or synthetic tackifiers, natural or synthetic resins, or blends thereof, namely, hot melt adhesives, solution adhesives and aqueous based adhesives.

Hot melt adhesives are made from a blend of polymers and tackifier resins and are normally solid at room temperature. Hot melt adhesives require an elevated temperature for applicaton to a substrate necessitating some type of hot melt gun. Solution adhesives do not suffer from this drawback. These adhesives comprise a solution of a blend of a polymer and a tackifier resin in a low boiling hydrocarbon solvent. When the adhesive is applied to a substrate the solvent evaporates. Due to environmental concerns and the rising cost of hydrocarbon solvent there has been an increasing need to reduce or eliminate the hydrocarbon solvent in such adhesives. Accordingly, the adhesives industry is seeking improved aqueous based adhesive compositions. Existing aqueous based adhesive compositions usually comprise a natural or synthetic latex in admixture with cellulose materials such as starch or natural or synthetic tackifier resins.

In developing any adhesive formulation one seeks the optimum combination of several adhesive properties and since it is not generally possible to achieve the optimum for every property it is necessary to obtain the best balance of properties for the particular use in mind. For pressure sensitive adhesives for use in the label industry one tries to optimise the loop tack and ball tack.

United States Patent 4,189,419 to Avery international discloses a pressure sensitive adhesive comprising from about 50 to 60 % by weight on a dry basis of a tackifier and from about 50 to 40 % by weight on a dry basis of a carboxylated styrene butadiene polymer.

A paper entitled "Styrene Butadiene Latexes for Adhesive Applicaitons" by Robert G. Kahn of Dow Chemical, published in Adhesive Age, December of 1977 discloses a similar pressure sensitive adhesive composition which also contains butyl benzyl phthalate, as a "plasticizer". While the amount of plasticizer is relatively small the plasticizer comprises a hydrocarbon phase in the adhesive and the composition is not entirely aqueous based.

United States Patent 4,179,415 issued December 18, 1979, to Johnson and Johnson discloses a substantially aqueous based adhesive composition containing a latex having a high proportion of isoprene.

United Kingdom patent application 2097410A discloses novel pressure sensitive adhesives comprising a latex of a polymer and a tackifier resin, the polymer being obtained from particular amounts of vinyl or vinylidene aromatic monomers and $C_4$-$C_8$ conjugated diene monomers and an unsaturated carboxylic acid. Similarly European patent application 0062343-A discloses a latex of a copolymer obtained from a hard monomer such as styrene, a soft monomer such as butadiene and an unsaturated acid which may be blended with a tackifying resin to produce formulation useful as a pressure sensitive adhesive.

Acrylic polymers and copolymers are one of the principal polymers used in aqueous based pressure sensitive adhesives. Typically two types of acrylic polymers are used, those that are predominantly octyl acrylates such as 2-ethyl-hexyl acrylate and those that are predominantly butyl acrylate.

Acrylic polymers have hitherto proved difficult to tackify with hydrocarbon resins and rosin esters such as those commercially available as Snowtack (Registered Trade Mark) have been used. Recently attempts have been made to develop hydrocarbon resins which are effective tackifiers for acrylate polymer pressure sensitive adhesives. Our European Patent Application 0196844 describes tackifiers which are useful to tackify 2-ethyl hexyl acrylate based adhesives, such as those based on Acronal V 205 (Registered Trade Mark) and Acronal 85D (Registered Trade Mark).

These tackifier resins which have a softening point from 10°C to 120°C are obtained from a feed which is predominantly $D_5$ olefines and diolefines and one or more monovinyl aromatic compounds, the resin containing from 10 to 60 wt% of the monovinyl aromatic compound. These tackifiers have not proved sufficiently compatible with butyl acrylate based polymer emulsions to provide satisfactory tackification due, it is believed, to some extent to the presence of significant amounts of diolefins in the feed giving a branched resin structure.

We have now found that hydrocarbon resins are effective tackifiers for butyl acrylate based polymers providing they have the following characteristics :

(i)     A weight average molecular weight as measured by GPC with a polystyrene calibration of less than 2000.

(ii)    An aromatic content as measured by nuclear magnetic resonance of from 35% to 85%, preferably up to 75% and are obtained by polymerisation of feed substantially free of monomers containing more than one polymerisable unsaturation.

The aromatic content is measured by proton NMR.

The present invention therefore provides the use as a tackifier for the production of adhesives from copolymers containing at least 40 wt% butyl acrylate of a resin having a weight average molecular weight below 2000 measured by GPC using a polystyrene calibration having an aromatic content of from 35% to 85% and being prepared by polymerisation of a feed substantially free from monomers containing more than one polymerisable unsaturation.

The invention further provides a pressure sensitive adhesive comprising fromp 50% to 90% by weight of copolymer containing at least 40 wt% butyl acrylate and from 10% to 50% by weight of a resin having a weight average molecular weight below 2000 having an aromatic content or from 35% to 85% and being prepared by polymerisation of a feed substantially free from monomers containing more than one polymerisable unsaturation.

In a further embodiment the present invention provides an aqueous emulsion containing from 40% to 70% by weight of a resin having a weight average molecular weight below 2000 and an aromatic content of from 35% to 85% and being prepared by polymerisation of a feed substantially free from monomers containing more than one polymerisable unsaturation.

The resins used as tackifier accordingly to the present invention are prepared by the polymerisation of a mixture of a petroleum cracked distillate boiling in the range 25°C to 80°C and monovinyl aromatic monomers in the proportions to yield a resin containing from 35 to 85 wt% of the aromatic compound as determined by Proton Nuclear Magnetic Resonance analysis.

The petroleum cracked distillate comprises a mixture of a saturated and unsaturated materials the unsaturated materials being mono-olefines and, although the unsaturated material is predominantly $C_5$, some higher and lower materials such as $C_6$ olefines may be present. The distillate may also contain saturated aliphatic or aromatic materials which can act as polymerisation solvent.

The preferred monovinyl aromatic monomers are styrene, alpha methyl styrene, vinyl toluene or its individual isomers; indene may also be used.

The feeds should be substantially free of monomers combining more than one polymerisable unsaturation to avoid significant branching in the resin since it is believed that it is the linear structure which gives the compatability with the butyl acylate based polymers. Small amounts of such materials can however be tolerated for instance up to about 7 preferably up to 2 wt% based on polymerisable material. Monomers such as dicyclopentadiene and terpenes which contain two unsaturations only one of which is polymerisable under the conditions used may be present.

The resins are conveniently prepared by Friedel-Crafts catalysed polymerisation in which the mixture of cracked distillate and monovinyl aromatic monomer are treated with 0.25 - 2.5 wt% of a catalyst such as aluminium chloride, aluminium bromide, or solutions, slurries or complexes thereof or borontrifluoride. These reactions are generally carried out at temperatures in the range 0 to 120°C, preferably 0 to 70°C more preferably 20 to 55°C the conditions being controlled to yield a resin of the required softening point.

Residual catalyst is quenched by suitable methods such as addition of methyl alcohol and subsequent filtration followed by water and/or caustic washing. The final solution may then be stripped of unreacted hydrocarbons and low molecular weight oils by vacuum or steam distillation.

The feeds polymerised contain sufficient amounts of the monovinyl aromatic monomer or mixtures thereof to result in an aromatic content from 35 to 85%, preferably from 40 to 70%. They suitably have a ring and ball softening point from 10°C to 90 preferably up to 80°C. The resins may also contain minor amounts of other unsaturated monomers such as terpenes in particular alpha-Pinene. The optimum softening point depends on the nature of the butyl acrylate polymer with which it is to be used but we prefer it be in the range 30°C to 75°C. The resins are conveniently supplied as aqueous emulsions and the emulsions may readily be produced by mixing with water and an anionic or nonionic emulsifier as described in our European Patent Applications 85471. We prefer that the emulsion contain 40 to 60 wt% of the resin preferably more than 50 wt%.

The butyl acrylate polymers used in the adhesive compositions of the present invention can be in solution or can be a solid polymer in the case of hot melts but are generally aqueous emulsions of the butyl acrylate polymer and the polymer should contain at least 40 wt% butyl acrylate. Examples of other monomers which may be copolymerised with butyl acrylate include ethylenically unsaturated acids such as acrylic acid and methacrylic acid, unsaturated esters such as vinyl esters including vinyl acetate or acrylic ester or methacrylic esters such as 2-ethyl hexyl acrylate. Styrene is another common comonomer. Nitrogen containing monomers such as acrylonitrile may also be used. Copolymers may contain more than one of such comonomers according to the properties required of the adhesive formulation. These butyl acrylate polymers may be prepared by conventional polymerisation techniques.

The emulsion of the butyl acrylate polymer and the tackifier are blended using conventional blenders to provide a homogeneous mixture.

The adhesive compositions of the present invention may be applied to a substrate and then dried using conventional substrates and procedures. The substrate is usually relatively thin material, usually no greater than about 3.2mm in thickness. However, the present invention contemplates that the adhesives could be used on conventional types of substrates. In the manufacture of tapes and labels the substrate is a relatively thin sheet material. The sheet material may be paper or a polymeric material which is flexible at about room temperature.

The sheet material may be a homopolymer of an ethylenically unsaturated monomer such as ethylene, propylene or vinyl chloride, provided the substrate has sufficient flexibility for the desired end use. Also, the sheet material may be a polyester or a polyimide. The substrate may be made from cellulosic or reconstituted cellulosic material such as rayon. The substrate need not be a sheet material but may be composed of fibres which may be woven, or non woven as is the case in paper. Woven substrates may be made from cellulisic material, such as cotton or from fibres of any of the above mentioned polymers.

The composition is applied to the substrate using conventional coating methods such as roller coaters, blade coaters, meyer rods or air coaters. The coated substrate is then dried usually by passing it through a heating tunnel or oven through which may be circulating hot air, alternatively infrared lamps may be used to dry the coated substrate. The drying time will be a function of a number of factors such as the heat capacity of the substrate, the type of heating, the oven temperature, air velocities (if circulating air is used) and the rate of passage of the substrate time/temperature relationships to determine optimum drying conditions in his equipment for the product.

The substrate should be coated with sufficient of the adhesive composition to provide a dry coat weight from about 5 to about 100 $g/m^2$ preferably from 16 $g/m^2$ upwards. Generally in the manufacture of tapes using a continous sheet polymeric substrate a dry coat weight of about 15-30 $g/m^2$ is used. In the manufacture of labels a dry coat weight from about 15 to about 30 $g/m^2$ is generally used. In the manufacture of masking tape a dry coat weight from about 30 to 65 $g/m^2$ preferably at least 35 to 50 $g/m^2$ is usually used. After drying the coated substrate is cut to the required dimension.

In the manufacture of tape the substrate is cut into strips and rolled to provide a finished product. The substrate may also be cut into shaped items to provide labels or medicinal tapes.

The present invention is illustrated by the following examples:

In these examples a series of resins were prepared from $C_5$, and $C_6$ feeds, and for comparison from feeds also containing a diolefin feed of Initial Boiling Point 70°C (IBP-70) and various aromatics including for comparison divinyl benzene. The compositions of these feeds were as follows :

|  | C6 Olefin | C5 Olefin | IBP-70 |
|---|---|---|---|
| C4 | 0.3 | 0.3 | |
| n-butane | 0.7 | 0.5 | |
| butene-2t | 0.4 | 1.2 | 0.1 |
| butene-2c | 0.4 | 0.8 | 0.8 |
| butadiene-1,2 | | | 0.9 |
| 3-Me-butene-1 | <0.1 | 0.6 | 1.6 |
| pentadiene-1,4 | | 0.1 | 2.6 |
| iso-pentane | 11.2 | 2.5 | 8.0 |
| pentene-1 | 0.1 | 2.2 | 6.1 |
| 2-Me-butene-1 | 0.9 | 5.1 | 6.4 |
| isoprene | | 0.4 | 18.6 |
| n-pentane | 0.4 | 7.7 | 12.8 |
| pentene-2t | 1.1 | 17.1 | 3.8 |
| pentene-2c | 0.4 | 6.1 | 2.3 |
| 2-Me-butene-2 | 4.6 | 19.1 | 3.1 |
| pentadiene-1,3t | | 0.2 | 9.3 |
| cyclopentadiene | | 0.5 | 3.1 |
| pentadiene-1,3c | | 0.1 | 5.5 |
| cyclopentadiene | | 0.5 | 3.1 |
| cyclopentene | | 11.7 | 3.7 |
| 4/3-Me-pentene-1 | 1.0 | 0.1 | 0.2 |

| | C6 Olefin | C5 Olefin | IBP-70 |
|---|---|---|---|
| 4-Me-pentene-2c ) | | | |
| 3-Me-pentadiene-1,4 ) | 1.7 | 1.0 | 0.1 |
| 2,3-di-Me-butene-1 ) | | | |
| cyclopentane | | 11.7 | 1.0 |
| 4-Me-pentene-2t | 3.5 | 0.6 | 0.4 |
| 2,3-di-Me-butane | 1.6 | | |
| 2-Me-pentane | 5.2 | 1.0 | 1.0 |
| 2-Me-pentene-1 | | | |
| hexene-1 | 5.7 | 0.3 | 0.4 |
| 3-Me-pentane | 2.7 | 0.5 | 0.4 |
| 1-cis-4-hexene-1 ) | | | |
| 2-Et-butene-1 ) | | | |
| hexene-3c+t ) | | | |
| hexene-2t ) | 32.0 | 3.8 | |
| 2-Me-pentene-2t ) | | | |
| 3-Mepentene-2c ) | | | |
| hexene-2c ) | | | |
| n-hexane | 1.4 | 2.0 | 1.0 |
| 1,3-di-methylbutene-2 | 4.0 | | |
| 1,4-di-methylbutene-2 | 2.0 | | |
| 3-Me-pentene-2t ) | 17.0 | | |
| 4,4-di-Me-pentene-2t ) | | | |
| Me-cyclopentadiene 1/2 | | | 0.2 |
| Me-cyclopentane | | 1.1 | 0.3 |
| 2,4-di-Me-pentane | | 0.1 | 0.1 |
| benzene | | 1.5 | |
| 2,4-di-me-pentene-2 | 0.4 | 1.1 | 0.1 |
| hexadienes | | | 0.1 |
| | | | |
| NON-CLASSIFIED | 0.8 | 0.3 | |
| SATURATED | 23.2 | 27.1 | 24.6 |
| OLEFINS | 76.0 | 69.7 | 30.0 |
| DIOLEFINS | | 1.3 | 40.3 |
| AROMATIC | | 1.5 | |

The feeds were copolymerised with varying amounts of styrene optionally together with alpha-methyl styrene or indene using about 1 part of aluminium trichloride catalyst for 100 parts feed at a polymerisation temperature of 40°C. The feed and catalyst were added to the reactor over 45 minutes and left for a further 15 minutes, after polymerisation the materials were hydrolysed, then neutralised with ammonium hydroxide, and stripped to remove volatiles and any very low molecular weight materials.

The resins obtained were subjected to proton NMR analysis and were tested as tackifiers for the commercially available predominantly butyl acrylate polymer based emulsion Acronal V 208 (Registered Trade Mark) marketed by BASF. The compatibility of the resins with the acrylic polymer was rated visually by coating a mixture of an emulsion of the resin and polymer on Mylar (resin : polymer dry weight ratio = 50:50) and observing an eventual haziness due to incompatibility. The adhesive properties of 70:30 blends (acrylic polymer : resin dry weight ratio) were measured from adhesive films made by coating the resin/acrylic emulsion mixture on Mylar (Registered Trade Mark) and drying in a ventilated oven at 120°C for 2 minutes to give a coating weight of 22 g/m$^2$. The resins were emulsified by the process described in our European Patent Application 85471. The feed compositions, resin and adhesive properties are set out in the following Table.

6

| Sample n° | 1 | 2 | 3 | 4 | 5 | 6 | 7 | 8 | 9 |
|---|---|---|---|---|---|---|---|---|---|
| **FEED COMPOSITION** | | | | | | | | | |
| Styrene | 40.0 | 20.0 | 40.0 | 30.0 | 30.0 | 31.8 | 31.8 | 27.7 | 31.8 |
| α-Methyl Styrene | | 20.0 | - | - | - | - | - | - | - |
| Indene | | | | 10.0 | 10.0 | 4.5 | - | - | - |
| α-Pinene | - | - | - | - | - | - | 4.5 | 9.8 | - |
| DCPD | - | - | - | - | - | - | - | - | 4.5 |
| C$_6$ Olefin | 25.0 | 25.0 | 35.0 | 25.0 | 35.0 | 31.0 | 31.8 | 31.8 | 31.8 |
| Solvesso 100(RTM) | 25.0 | 25.0 | 25.0 | 25.0 | 25.0 | 22.7 | 22.7 | 22.7 | 22.7 |
| Petroleum ether* | 10.0 | 10.0 | - | 10.0 | - | 9.1 | 9.1 | 9.1 | 9.1 |
| AlCl$_3$ | 1.0 | 1.0 | 1.0 | 1.0 | 1.0 | 0.91 | 0.91 | 0.91 | 0.91 |
| **RESIN PROPERTIES** | | | | | | | | | |
| Softening Pt (°C) | 44 | 36 | 38 | 75 | 75 | 56 | 47 | 47 | 56 |
| % aromaticity(NMR) | 72 | - | 65 | 68 | 71 | - | - | 71 | 66 |
| F ** | 0 | 0 | 0 | 0 | 0 | 0 | 0 | 0 | 0 |
| Compatibility : 50:50 V208/resin (dry wt. basis) | Yes | Yes | Yes | Yes | Yes | Yes | Yes | Yes | Yes |
| **ADHESIVE PROPERTIES** 70:30 V208/resin (dry wt. basis) peel strength on stainless steel | 13.6 | 13.8 | 13.0 | 12.6 | 12.6 | 12.0 | 12.6 | 13.0 | 13.0 |
| Loop tack on stainless steel | 6.9 | 6.0 | 6.5 | 7.9 | 5.8 | 4.7 | 6.2 | 6.6 | 5.0 |
| Loop tack on polyethylene | 1.8 | 3.0 | 3.8 | 0.8 | 1.6 | 2.3 | 3.8 | 4.2 | 3.8 |
| Shear strenght on stainless steel | 6.6 | 4.9 | 3.9 | - | - | - | 4.0 | 5.0 | - |

| Sample n° | 10 | 11 | 12 | 13 | 14 | 15 | 16 | 17 | 18 |
|---|---|---|---|---|---|---|---|---|---|
| **FEED COMPOSITION** | | | | | | | | | |
| Styrene | 13.0 | 26.0 | 30.0 | 30.0 | 40.0 | 40.0 | 40.0 | 20.0 | 34.0 |
| $C_5$ Olefin | 70.0 | 43.0 | 30.0 | 40.0 | 40.0 | 40.0 | 40.0 | 80.0 | - |
| IBP 70 | 17.0 | 31.0 | 20.0 | 10.0 | - | - | - | - | - |
| Divinyl benzene | - | - | - | - | - | 0.4 | 0.8 | - | 6.0 |
| Solvesso 100(RTM)* | - | - | - | - | - | - | - | - | - |
| Petroleum ether | - | - | 20.0 | 20.0 | 20.0 | 20.0 | 20.0 | - | 20.0 |
| $AlCl_3$ | 0.75 | 1.0 | 1.0 | 1.0 | 1.0 | 1.0 | 1.0 | 1.0 | 1.0 |
| **RESIN PROPERTIES** | | | | | | | | | |
| Softening Pt (°C) | 60 | 70 | 40 | 55 | 58 | 50 | 58 | 33 | 69 |
| % aromaticity(NMR) | 79 | 46 | 43 | 45 | 57 | 58 | 61 | 66 | 59 |
| F ** | 10 | 17 | 13 | 7 | 0.8 | 1.3 | 1.9 | 1.4 | 15 |
| Compatibility : 50:50 V208/resin (dry wt. basis) | No | No | No | No | Yes | Yes | Yes | Yes | No |
| **ADHESIVE PROPERTIES** 70:30 V208/resin (dry wt. basis) | | | | | | | | | |
| peel strength on stainless steel | - | - | 9.4 | - | 11.6 | 14.2 | 11.4 | 13.6 | - |
| Loop tack on stainless steel | - | - | 2.6 | 4.5 | 8.3 | 5.8 | 7.7 | 6.9 | - |
| Loop tack on polyethylene | - | - | 0.8 | 1.0 | 5.9 | 3.2 | 3.3 | 4.2 | - |
| Shear strength on stainless steel | - | - | 21 | 19 | 17 | 15 | 16 | 10 | - |

EP 0 383 497 B1

Notes to Tables :

Peel strength and loop tack values are expressed in N/25 mm (FINAT TEST METHOD 1 and 9).
Shear strength is tested on 25 mm x 25 mm sample with 1 Kg in hours (FINAT TEST METHOD 8).

F ** is defined as the wt.% of monomers having more than one polymerisable unsaturation based on the polymerisable material and is calculated from the contents of such monomers in the feed components.

* Petroleum ether is a $C_5/C_6$ saturated hydrocrabon isomer mixture.

Aromaticity is determined by proton NMR to determine the proportion of aromatic protons using an internal standard and is expressed in equivalent styrene content.

## Claims

1. The use as a tackifier for the production of adhesives from copolymers containing at least 40 wt% butyl acrylate of a hydrocarbon resin having a weight average molecular weight below 2000 measured by GPC using a polystyrene calibration having an aromatic content of from 35% to 85% and being prepared by polymerisation of a feed substantially free from monomers containing more than one polymerisable unsaturation.

2. A pressure sensitive adhesive comprising from 50% to 90% by weight of copolymer containing at least 40 wt% butyl acrylate and from 10% to 50% by weight of a hydrocarbon resin having a weight average molecular weight below 2000 measured, by GPC using a polystyrene calibration having an aromatic coontent of from 35% to 85% and being prepared by polymerisation of a feed substantially free from monomers containing more than one polymerisable unsaturation.

3. An aqueous emulsion containing from 40% to 70% by weight of a hydrocarbon resin having a weight average molecular weight below 2000 measured by GPC using a polystyrene standard and an aromatic content of from 35% to 85% and being prepared by polymerisation of a feed substantially free from containing more than one polymerisable unsaturation.

## Patentansprüche

1. Verwendung von Kohlenwasserstoffharz, das ein durchschnittliches Molekulargewicht (Gewichtsmittel) unter 2 000, gemessen durch GPC unter Verwendung einer Polystyrol-Eichung, und einen Aromatengehalt von 35 % bis 85 % aufweist und durch Polymerisation eines Einsatzmaterials hergestellt worden ist,

9

das im wesentlichen frei von Monomeren mit mehr als einer polymerisierbaren Ungesättigtheit ist, als Klebrigmacher zur Herstellung von Klebstoffen aus mindestens 40 Gew.% Butylacrylat enthaltenden Copolymeren.

2. Selbstklebender Klebstoff, der 50 bis 90 Gew.% eines mindestens 40 Gew.% Butylacrylat enthaltenden Copolymers und 10 bis 50 Gew.% eines <u>Kohlenwasserstoffharzes</u> umfaßt, das ein durchschnittliches Molekulargewicht (Gewichtsmittel) unter 2 000, gemessen durch GPC unter Verwendung einer Polystyrol-Eichung, und einen Aromatengehalt von 35 bis 85 Gew.% aufweist und durch Polymerisation eines Einsatzmaterials hergestellt worden ist, das im wesentlichen frei von Monomeren mit mehr als einer polymerisierbaren Ungesättigtheit ist.

3. Wäßrige Emulsion, die 40 bis 70 Gew.% eines <u>Kohlenwasserstoffharzes</u> umfaßt, das ein durchschnittliches Molekulargewicht (Gewichtsmittel) unter 2 000, gemessen durch GPC unter Verwendung eines Polystyrol-Standards, und einen Aromatengehalt von 35 bis 85 Gew.% aufweist und durch Polymerisation eines Einsatzmaterials hergestellt worden ist, das im wesentlichen frei von Monomeren mit mehr als einer polymerisierbaren Ungesättigtheit ist.

## Revendications

1. Utilisation, comme agent d'adhésivité pour la production d'adhésifs à partir de copolymères contenant au moins 40 % en poids d'acrylate de butyle, d'une résine <u>hydrocarbonée</u> ayant une moyenne pondérale du poids moléculaire inférieure à 2000, la mesure étant effectuée par CPG au moyen d'un échantillon de polystyrène de référence, ayant une teneur en composés aromatiques de 35 % à 85 % et étant préparée par polymérisation d'une charge pratiquement dépourvue de monomères contenant plus d'une insaturation polymérisable.

2. Adhésif sensible à la pression comprenant 50 % à 90 % en poids d'un copolymère contenant au moins 40 % en poids d'acrylate de butyle et 10 % à 50 % en poids d'une résine <u>hydrocarbonée</u> ayant une moyenne pondérale du poids moléculaire inférieure à 2000, la mesure étant effectuée par CPG au moyen d'un échantillon de polystyrène de référence, ayant une teneur en composés aromatiques de 35 % à 85 % et étant préparée par polymérisation d'une charge pratiquement dépourvue de monomères contenant plus d'une insaturation polymérisable.

3. Emulsion aqueuse contenant 40 % à 70 % en poids d'une résine <u>hydrocarbonée</u> ayant une moyenne pondérale du poids moléculaire inférieure à 2000, la mesure étant effectuée par CPG au moyen d'un échantillon de polystyrène de référence, et une teneur en composés aromatiques de 35 % à 85 % et étant préparée par polymérisation d'une charge pratiquement dépourvue de monomères contenant plus d'une insaturation polymérisable.